# EUROPEAN PATENT SPECIFICATION

(11) **EP 2 008 081 B1**
(45) Date of publication and mention of the grant of the patent: **08.05.2019**
(21) Application number: 07718583.3
(22) Date of filing: 16.03.2007
(51) Int. Cl.: G01M 3/26, G01N 19/08, G01L 13/00, G01M 3/02, G01M 3/32

(54) **METHOD FOR MONITORING FOR CRACKING IN A COMPONENT**
VERFAHREN ZUR ÜBERPRÜFUNG AUF RISSE IN EINER KOMPONENTE
PROCÉDÉ DESTINÉ À SURVEILLER LA FISSURATION DANS UN COMPOSANT

(30) Priority: 16.03.2006 AU 2006901363
(43) Date of publication of application: 31.12.2008
(73) Proprietor: Structural Monitoring Systems Ltd, Osborne Park, WA 6017 (AU)
(72) Inventor: LAXTON, Nigel, Mt Hawthorn, Western Australia 6016 (AU)
(74) Representative: Colombo, Stefano Paolo
(86) International application number: PCT/AU2007/000334
(87) International publication number: WO 2007/104110

(56) References cited:
- EP-A2- 0 327 118
- WO-A1-01/98746
- GB-A- 2 072 951
- GB-A- 2 191 270
- JP-A- H0 557 376
- US-A- 1 488 982
- US-A- 4 104 906
- US-A- 4 254 415
- US-A- 4 453 417
- US-A- 5 357 792
- US-A- 5 770 794
- US-A1- 2002 029 614
- US-B2- 6 715 365

## Description

### FIELD OF THE INVENTION

The present invention relates to a method for monitoring for cracking of a component and to a connector for use in monitoring for cracking of a component.

### BACKGROUND

Cracking and flaws within a stressed component can result in impeded performance of the component and, in the worst case scenario, catastrophic failure. Consequently, monitoring for the presence of such cracks and flaws is often a requirement. Cracking may occur solely within the component, or may be a surface crack that penetrates into the component.

In some situations cracking can be tolerated up to a maximum length of crack. In such situations it may be desirable to be able to not only monitor for the presence of a crack, but also determine the crack length at any particular time and further observe the growth of a crack over time.

Ideally, some components are tested *in situ,* rather than the component being taken off line, which may involve disassembly of a larger structure.

US 4 254 415 A discloses a system for revealing cracks in an elongated cylindrical member, such as an axle, a bolt, stud, rivet, supporting column, etc. The member is generally solid and includes, in accordance with the invention, a cavity extending inwardly from at least one end of the member and terminating in a bottom surface of the cavity. A plurality of holes extend inwardly from the bottom surface of the cavity and are disposed in circular arrangement around the bottom surface of the cavity and adjacent to the periphery of the member. A ring member is disposed in the cavity, the bottom surface of the ring member being spaced from the bottom surface of the cavity to define a chamber therebetween. An opening extends through the ring member from the top surface to the bottom surface thereof, and valve means are inserted in the opening to permit the insertion of gas under pressure into the chamber and into the holes. When a crack develops in the member and crosses one of the holes, the gas under pressure will escape through the crack from the chamber. The member includes a detector for determining that the gas has escaped from the chamber and holes to thereby detect the crack.

US 1 488 982 A discloses means for detecting cracks in axles and crank pins. US 5,357,792 discloses an adapter for a fuel line. The adapter includes a hollow cylinder with a radial aperture and a valve housed in the radial aperture.

### SUMMARY OF THE INVENTION

According to the present invention, there is provided a connector according to claim 1.

Furthermore, according to the present invention, there is provided a method of monitoring for cracking of a component as claimed in claim 4.

### BRIEF DESCRIPTION OF THE DRAWINGS

In order that the invention may be more easily understood embodiments will now be described, by way of example only, with reference to the accompanying drawings, in which:
Figure 1: is an axiomatic view of a component and a connector according to a first illustrative example of the present invention;
Figure 2: is an axiomatic view of a component and a connector according to a second illustrative example of the present invention;
Figure 3: is an axiomatic view of a component and a connector according to a third illustrative example of the present invention;
Figure 4: is a cross section view of a component and a connector according to an embodiment of the present invention;
Figure 5: is an axiomatic view of the component and connector of figure 4;
Figure 6: is a schematic axiomatic view of a connector according to an embodiment of the present invention; and
Figure 7: is a cross section view of a plug according to an embodiment of the present invention.

### DETAILED DESCRIPTION OF THE PREFERRED EMBODIMENTS

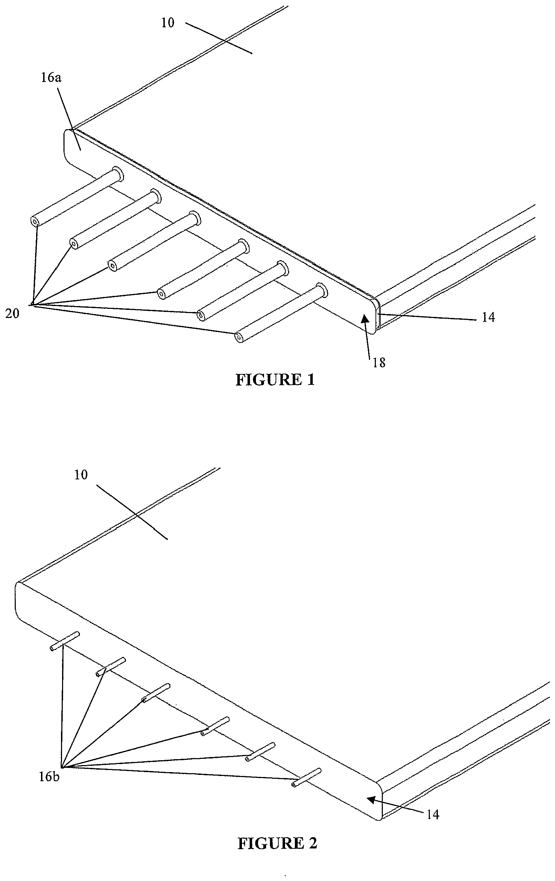

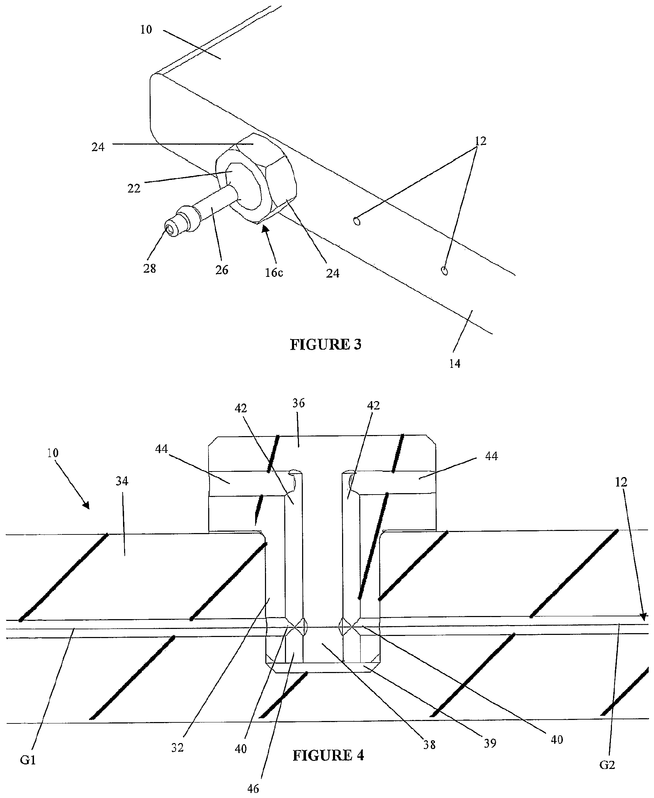

Figures 1 to 5 and 7 show a component 10 that is elongate and has a constant cross section. Elongate holes 12 (as shown in figures 3, 4 and 7) extend through the component 10 in the elongate direction. Each elongate hole 12 opens onto the end faces 14 of the component. The elongate holes 12 form galleries of a pressure monitoring system. The monitoring system may comprise a system for measuring pressure differentials between the holes 12 and an ambient pressure. The system may typically include a pressure source and a pressure or differential pressure measurement instrument. The pressure source is applied to the holes 12 and can be at a positive pressure relative to ambient pressure or at a negative pressure relative to ambient pressure (i.e. a relative vacuum). One example of a relative negative pressure (i.e. vacuum) based monitoring system is discussed in United States Patent No. 5,770,794. An example of a relative positive pressure based monitoring system is described in International Publication No. WO 02/21096. The monitoring system, whether it be based on a relative positive pressure or relative negative pressure will provide a measure or indication of pressure change in pressure in the holes, or alternately pressure differential or a change in pressure differential between the holes 12 and ambient pressure.

A crack that intersects one of the elongate holes 12 in the component can be detected by a change in the pressure level(s) in the respective elongate holes 12 that are measured by the instrument of the monitoring system. It is to be appreciated that the spacing of elongate holes 12 will have a direct influence of the minimum detectable crack length. The component 10 shown in the figures may be, for example, an aluminium stringer used in the structure of an aircraft.

In some examples while multiple elongate holes are provided, such as shown in Figure 1, not all of the holes 12 need be connected at the same time to the monitoring system. Some of the holes 12 may be provided as redundant holes to be used or connected to the monitoring system when a previously connected hole 12 becomes blocked, damaged or otherwise inoperable. In such an example a switching system may be incorporated to open and close valves between the holes and the monitoring system (for example in connectors 16) which are operated to isolate a hole 12 that becomes blocked, damaged or otherwise inoperable and connect a previously unused or isolate "healthy" hole 12 to the monitoring system.

The elongate holes 12 are formed in the component 10 during the manufacturing process of the component 10. In this example, the component 10 has a constant cross section, and the size and relative position of the elongate holes 12 is also constant. The elongate holes 12 have an internal diameter of less than 5mm. Typically, the elongate holes 12 have an internal diameter of approximately 0.5mm. It is to be appreciated that the component 10 can be formed by an extrusion process, such that the elongate holes 12 are formed in the component 10 simultaneously with the forming of the component.

As shown in figures 1 to 3, a connector 16a, 16b, 16c (hereinafter referred to in general as "connectors 16") can be used to connect to tubing (not shown) for plumbing the monitoring instrument. As previously noted, the elongate holes 12 in the component 10 shown in figures 1 to 5 and 7 open onto an end face 14 of the component 10.

The connector 16a shown in figure 1 is in the form of flanged portion 18 that is affixed to an end face 14, for example by a pressure sensitive adhesive. Tubes 20 extend from the flanged portion 18, each tube 20 registering with an opening of one of the elongate holes 12 at the respective end face 14. Each tube 20 defines a throughway that extends through the respective tube 20 and the flanged portion 18. Affixing of the flanged portion 18 to the end face 14 and about the openings of the elongate holes 12 facilitates the forming of a substantially hermetic seal about the opening of each of the elongate holes 12. Accordingly, flow of atmospheric air between the flanged portion and end face, and thus into the elongate holes 12, is minimized.

The connectors 16b shown in figure 2 are each in the form of a substantially rigid tube of, for example, a metal, metal alloy or plastics material. The outer diameter of the connectors 16b is substantially equal to the inner diameter of the elongate holes 12. Each connector 16b can be press-fitted or otherwise affixed (for example, by an adhesive) into a respective one of the elongate holes 12.

In examples of the connector 16b that are press-fitted into the elongate holes 12, the interference between the connector 16b and the component 10 about the respective hole forms a seal. To facilitate insertion and the formation of a suitable seal, the connector 16b can have a conical outer surface that tapers toward the end of the connector 16b that is inserted into the elongate hole 12. The connectors 16b shown in figure 2 are in the form of linear tubes with smooth outer surfaces. It will be appreciated that alternative examples may be provided in which one or more bends are provided along the length of the connector 16b. The connectors 16b may be provided with barbs on the outer surface to facilitate the connection with tubing (not shown) to plumb to other elements within the monitoring system.

The connector 16c shown in figure 3 has an externally threaded element (not shown in figure 3) that engages an internal thread (also not shown) adjacent the opening of the respective elongate hole 12. The externally threaded element extends from a body portion 22. As shown in figure 3, the body portion 22 can be provided with flats 24 to facilitate rotation of the connector 16c such that the connector 16c engages the internal thread adjacent the opening. A pin portion, such as a spigot 26, extends from the body portion 22 in the opposite direction to the externally threaded element. A throughway 28 is provided that extends through the spigot 26, the body portion 22 and the externally threaded element. Thus, when the connector 16c is fastened to a component 10 the throughway 28 registers with the respective elongate hole 12. The body portion 22 has a larger outer diameter than the spigot 26 and threaded element.

It will be appreciated that in order to effect monitoring of the pressure level in an elongate hole 12, or a change in pressure differential between a hole 12 and ambient pressure, and thus monitor for the presence of a crack that intersects the respective elongate hole 12, it is desirable that the elongate hole 12 is substantially hermetically sealed. In some instances it may be desirable to seal a elongate hole 12 at, or near, an end face 14. This can be done by simply sealing the respective elongate hole 12 at the opening onto the end face 14 using any suitable sealant, such as, for example, polyurethane or silicone. Alternatively, sealing of an elongate hole 12 may be achieved by filling a portion of the elongate hole 12 adjacent the opening onto the end face 14 with a metal or metal alloy with a pin or plug that is inserted into the elongate hole 12. Such a pin can be oversize with respect to the hole such that the pin is press-fitted into the elongate hole 12. Alternatively or additionally, an adhesive/sealant may be used to retain the pin within the elongate hole 12 and form a seal between the component and the pin.

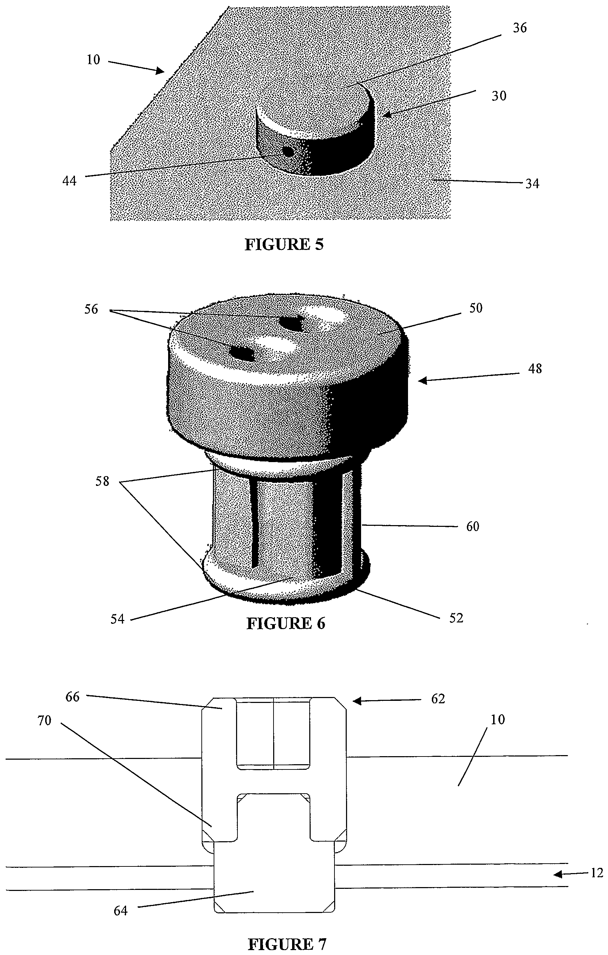

In some instances it may be impractical to provide a connector that registers with the respective elongate hole 12 by connection in the elongate direction of the elongate hole 12. Figures 4 and 5 show a connector 30 that is to be received within a secondary hole 32 formed in the component 10. The secondary hole 32 extends from a side surface 34 of the component 10 such that the secondary hole 32 is transverse to the elongate hole 12. As shown in figure 4, the elongate hole 12 and secondary hole 32 intercept. The connector 30 has a head portion 36 and a pin portion 38. The pin portion 38 is received within the secondary hole 32 such that there is an interference between the pin portion 38 and the component 10 about the secondary hole 32.

A first passageway 40 within the pin portion 38 registers with the elongate hole 12 and is also co-linear with the elongate hole 12. A second passageway 42 extends through the pin portion 38 from the tip 39 of the pin portion 38 into the head portion 38. The second passageway 42 is transverse to the first passageway 40, such that the first and second passageways 40, 42 intercept. A third passageway 44 extends from an edge of the head portion 36 into the head portion 36. The third passageway 44 is transverse to the second passageway 42, such that the second and third passageways 42, 44 intercept. The first, second and third passageways 40, 42, 44 together form a throughway of the connector 30.

Tubing (not shown) to plumb the connector 30 to other elements within the monitoring system can be received within the third passageway 44. Alternatively or additionally, a connector 16b such as that shown in figure 2 can be used to connect tubing to the third passageway 44. A small bung 46 or the like can be used to seal the end of the second passageway 42 that is adjacent the tip 39 of the pin portion.

As shown in figure 4, the connector 30 forms a partition in the elongate hole 12, such that the elongate hole 12 is divided into a first and second elongate hole G₁, G₂ that are in fluid isolation from one another. Furthermore, as also shown in figure 4, the connector 30 has two first passageways 40, two second passageways 42 and two third passageways 44 such that tubing can be plumbed to each of the first and second elongate holes G₁, G₂ via the connector 30.

The connector 30 in figure 4 is aligned such that the first passageways 40 (and thus the throughways) are each in fluid communication with a respective one of first and second elongate holes G₁, G₂.

It is to be appreciated that sealing between the pin portion 38 and the component 10 is of importance to the performance of the monitoring system. A sealant or similar adhesive may be used to establish a seal about the pin portion 38. However, it will be appreciated that the sealant/adhesive should be applied with care to ensure any of the elongate hole 12, first passageways 40, second passageways 42 and/or third passageways 44 are not blocked (either partially or completely).

Alternatively, a seal may be established between the pin portion 38 and the component 10 by an interference fit. It will be appreciated that to establish an appropriate interference fit the pin portion 38 should be oversize with respect to the secondary hole 32. Furthermore, the tolerance of the pin portion 38 dimensions and/or the secondary hole 32 dimensions may need to be tightly controlled. The pin portion 38 may be made of a material that has some "give", such as a relatively hard elastomer or similar plastics material.

In some applications the connector 30 may tend to be dislodged from the component 10, such as by vibration of the component 10 or by impact from other objects. In such situations, it may be necessary to adhere the connector 30 to the component, such as by adhering the head portion 36 to the side surface 34.

Figure 6 shows a connector 48 that is similar to the connector 30 in that, in use, the connector 48 is disposed within a secondary hole 32 that is transverse to, and intercepts, the elongate hole 12. The connector 48 has a head portion 50 and a pin portion 52, which is received within the secondary hole 32. The connector 48 has two faces 54 (one is shown in figure 6) that each are aligned to face in the direction of the elongate hole 12. Two throughways 56 extend from an opening 58 in the head portion 50 and through the head portion 50. Each throughway 56 opens onto a respective one of the two faces 54. Thus, each throughway 56 is in fluid communication with the elongate hole 12. Tubing to plumb the connector 48 to other elements within the monitoring system can be received within the throughways 56.

The connector 48 has two sealing rings 58 that are positioned at opposing ends of the pin portion 52. Each sealing ring 58 extends circumferentially around the pin portion 52. In addition, two sealing strips 60 (one is shown in figure 6) extend along the pin portion 52 to join the two sealing rings 58. Each sealing strip 60 is positioned between the two faces 54. Accordingly, when the connector 48 is inserted into an elongate hole 12, the connector 48 divides the elongate hole 12 into first and second elongate holes that are substantially in fluid isolation from one another.

The connector 48 can be moulded in a plastics material, such as a fluoropolymer. The connector 48 and secondary hole 32 can be dimensioned such that the sealing rings 58 and sealing strips 60 form an interference fit within the secondary hole 32. Accordingly, the sealing rings 58 and sealing strip 60 form a suitable seal to minimize the risk of leaks.

It is to be appreciated that the orientation of the third passageways 44 in the connector 30, and similarly the throughways 56 in the connector 48, may be selected to provide alternative take-off angles and directions for the tubing to that illustrated in the figures.

Figure 7 shows plug 62 for blocking off a portion of a elongate hole 12 within a component 10. A secondary hole 70 that extends transverse to, and intercepts, the elongate hole 12 is provided in the component 10. In use, the plug 62 is disposed within the secondary hole 70. The plug 62 has a bung portion 64 and an externally threaded member, such as a grub screw 66. The secondary hole 70 has a complementary thread to engage with the external thread on the grub screw 66. The bung portion 64 can be made of an elastomeric material such that the bung portion 64 can be compressed to form a seal about the elongate hole 12 and secondary hole 70; thus blocking off and dividing the elongate hole 12. The bung portion 64 can be adhered to the grub screw 66 such that the bung portion 64 can be removed from the secondary hole 70 with the grub screw 66. Alternatively or additionally, the bung portion 64 can be provided with a lip (not shown) that is received within a corresponding groove (also not shown) in the grub screw 66 such that the bung portion 64 and grub screw 66 are connected.

The plug 62 may provide an alternative seal for an end of the elongate hole 12 to sealing the elongate hole 12 at the opening on to the end face 14. One advantage of the plug 62 over a seal at the end face is that the plug 62 may later be readily removed and replaced with a connector, such as, for example, either the connector 30 or connector 48.

It will be understood to persons skilled in the art of the invention that many modifications may be made without departing from the scope of the invention. For example, instead of forming a component having elongate holes in an extrusion process, the component, with the holes, may be formed in a component during other manufacturing processes. For example, holes may be formed:
(a) during casting of a metallic, plastic or ceramic component by placing cores in the mould (which are removed by, for example burning out the cores, after the initial pour) before the metal is poured. Contiguous elongate holes in the solidified component will be formed that can be used in a monitoring system. An example of such an component formed by casting the component with holes is an engine block;
(b) during casting of concrete structures by placing cores (that are also removed by, for example, burning out the cores), or fine tubes, in the moulds and subsequently pouring concrete around the cores to form the elongate holes for use in a monitoring system; and
(c) during the lay-up process of a laminate structure, which is fabricated from a plurality of layers which are sandwiched together and cured. Elongate holes within such a laminate structure may be formed by leaving gaps between plies, placing a hole form, such as tubes between the plies or alternatively mandrels during the lay-up process that are subsequently removed. Once the laminate structure has been cured these elongate holes can be used in a monitoring system. Such laminate structure, which may be a composite laminate, are used extensively in modern aircraft. The elongate holes may be provided within a single layer in the laminate. Alternatively or additionally, the elongate holes may extend from one layer to another adjacent layer. Furthermore, an elongate holes may be formed in a laminate by leaving spaces between adjacent layers of the laminate structure.

In some embodiments, the component may be formed with one or more blind elongate holes. Accordingly, a single opening is provided on a surface of the component. Similarly, the component may be formed such that the elongate hole(s) do not open onto the surface of the component after the component forming step; that is, the elongate holes may be completely internal to the component after forming of the component. Subsequently, one or more secondary holes may be drilled or otherwise created in the component that each intercept one of the elongate holes. Connectors will then be provided to plumb the elongate holes to instrumentation of the monitoring system or other elongate holes.

The elongate holes 12 are not limited to being of circular cross section. Indeed, any desired cross section may be employed. Further, the elongate holes 12 need not be of uniform cross section. For example, portions of an elongate hole 12 may form a bulbous portion or a waist portion with respect to other portions of the respective elongate hole 12. It will also be appreciated that an elongate hole 12 need not be linear and may have, for example, one or more arcuate portions of varying radii.

Elongate holes 12 in two or more components 10 may be interconnected to form an extended hole. The hole need not of course be straight and can include numerous bends and turns. For example, elongate holes in two or more stringers of an aircraft wing may be interconnected. Similarly, elongate holes in the skin of an aircraft made of a laminate structure may be interconnected with elongate holes in a nearby stringer. Moreover frames, longerons, spars and other aircraft extrusions may be joined together with respective elongate holes in fluid communication to form circuits or networks of holes that can be used to detect or monitor cracks. This opens the possibility of structural health monitoring where the integrity of a large structure can be monitored as distinct from individual components or parts of a structure.

In embodiments in which a plurality of elongate holes 12 are provided within the component 10, elongate holes 12 may be connected in parallel, in series (in which two or more elongate holes 12 connected together), or in sets of elongate holes that are in parallel to other sets. In embodiments in which elongate holes, or sets of elongate holes, are arranged in parallel to one another, in use the monitoring system may be arranged such that different pressures are provided in different elongate holes /sets of elongate holes. For example, elongate holes within a component can be arranged to be alternately connected to ambient pressure and a relative negative pressure.

In the claims of this application and in the description of the invention, except where the context requires otherwise due to express language or necessary implication, the words "comprise" or variations such as "comprises" or "comprising" are used in an inclusive sense, i.e. to specify the presence of the stated features but not to preclude the presence or addition of further features in various embodiments of the invention.

## Claims

1. A connector (30, 48) for use in a pressure monitoring system that is applicable to a component (10) having an elongate hole (12) that extends through the component (10) adjacent to a surface (34) of the component and a secondary hole (32) that extends from the surface and intercepts the elongate hole (12), the connector (30, 48) being **characterized in that** it comprises:
a pin portion (38, 52) that is receivable in the secondary hole (32), the pin portion (38) defining a partition for dividing the elongate hole into a first elongate hole (G1) and a second elongate hole (G2);
a first throughway (40, 42, 44; 56) that extends through the connector and opens onto a first side of the partition and a second throughway (40, 42, 44; 56) that extends through the connector and opens onto a second opposing side of the partition.

2. A connector (30, 48) as claimed in claim 1,
wherein the pin portion further comprises a seal such that, in use, the first elongate hole (G1) is substantially in fluid isolation from the second elongate hole (G2).

3. A connector as claimed in either claim 1 or 2, further comprising a head portion (36, 50) from which the pin portion (38, 52) extends, wherein each throughway opens onto an external surface of the head portion.

4. A method of monitoring for cracking of a component (10), the method comprising:
forming a component (10) with a simultaneously formed elongate hole (12) that is internal to the component (10) and extends through the component (10) adjacent to a surface (34) thereof, and a secondary hole (32) that extends from the surface (34) and intercepts the elongate hole (12);
attaching a connector (30, 48) according to any one of claims 1 to 3 to the component (10), wherein the pin portion (38, 52) of the connector (30, 48)is received in the secondary hole (32) and defines a partition for dividing the elongate hole into a first elongate hole (G1) and a second elongate hole (G2), and wherein the first throughway and the second throughway (40, 42, 44; 52) of the connector (30, 48) are in fluid communication with the elongate hole (12); connecting the elongate hole (12) to a pressure measurement instrument via the connector (30, 48); and
monitoring the elongate hole (12) for change in pressure level.

## Patentansprüche

1. Verbinder (30, 48) zur Verwendung in einem Drucküberprüfungssystem, welcher auf eine Komponente (10) anwendbar ist, welche ein sich durch die Komponente (10) erstreckendes längliches Loch (12), das einer Oberfläche (34) der Komponente benachbart ist, und ein sekundäres Loch (32) aufweist, welches sich von der Oberfläche erstreckt und das längliche Loch (12) unterbricht, wobei der Verbinder (30, 48) **dadurch gekennzeichnet ist, dass** er aufweist:
einen Stiftteil (38, 52), welcher in das sekundäre Loch (32) aufgenommen werden kann, wobei der Stiftteil (38) eine Trennung definiert, um das längliche Loch in ein erstes längliches Loch (G1) und ein zweites längliches Loch (G2) zu unterteilen;
eine erste Passage (40, 42, 44; 56), welche sich durch den Verbinder erstreckt und sich zu einer ersten Seite der Trennung öffnet, und eine zweite Passage (40, 42, 44; 56), welche sich durch den Verbinder erstreckt und sich zu einer zweiten gegenüberliegenden Seite der Trennung öffnet.

2. Verbinder (30, 48) nach Anspruch 1, wobei der Stiftteil außerdem eine Dichtung aufweist, sodass das erste längliche Loch (G1) während des Betriebs von dem zweiten länglichen Loch (G2) im Wesentlichen fluidisoliert ist.

3. Verbinder nach einem der Ansprüche 1 oder 2, außerdem aufweisend einen Kopfteil (36, 50), von welchem aus sich der Stiftteil (38, 52) erstreckt, wobei sich jede Passage zu einer Außenfläche des Kopfteils öffnet.

4. Verfahren zum Überwachen einer Komponente (10) auf Risse, wobei das Verfahren aufweist:
Formen einer Komponente (10) mit einem gleichzeitig gebildeten länglichen Loch (12), welches sich innerhalb der Komponente (10) befindet und sich, einer von deren Oberflächen (34) benachbart, durch die Komponente (10) erstreckt, und einem sekundären Loch (32), welches sich von der Oberfläche (34) erstreckt und das längliche Loch (12) unterbricht;
Anfügen eines Verbinders (30, 48) nach einem der Ansprüche 1 bis 3 an die Komponente (10), wobei der Stiftteil (38, 52) des Verbinders (30, 48) in das sekundäre Loch (32) aufgenommen wird und eine Trennung zum Unterteilen des länglichen Lochs in ein erstes längliches Loch (G1) und ein zweites längliches Loch (G2) definiert, und wobei die erste Passage und die zweite Passage (40, 42, 44; 52) des Verbinders (30, 48) sich in Fluidkommunikation mit dem länglichen Loch (12) befinden; Verbinden des länglichen Lochs (12) mit einem Druckmessinstrument über den Verbinder (30, 48); und
Überwachen des länglichen Lochs (12) auf Druckniveauveränderungen.

## Revendications

1. Connecteur (30, 48) destiné à être utilisé dans un système de surveillance de la pression qui est applicable à un composant (10) ayant un orifice allongé (12) qui s'étend dans le composant (10) adjacent à une surface (34) du composant, et un orifice secondaire (32) qui s'étend depuis la surface et intercepte l'orifice allongé (12), le connecteur (30, 48) étant **caractérisé en ce qu'**il comprend :
une partie de broche (38, 52) qui peut être reçue dans l'orifice secondaire (32), la partie de broche (38) définissant une séparation destinée à diviser l'orifice allongé en un premier orifice allongé (G1) et un second orifice allongé (G2) ;
un premier passage (40, 42, 44 ; 56) qui s'étend dans le connecteur et s'ouvre vers un premier côté de la séparation, et un second passage (40, 42, 44 ; 56) qui s'étend dans le connecteur et s'ouvre vers un second côté opposé de la séparation.

2. Connecteur (30, 48) selon la revendication 1, dans lequel la partie de broche comprend en outre un joint de sorte que, pendant l'utilisation, le premier orifice allongé (G1) soit sensiblement en isolation de fluide par rapport au second orifice allongé (G2).

3. Connecteur selon la revendication 1 ou 2, comprenant en outre une partie de tête (36, 50) depuis laquelle la partie de broche (38, 52) s'étend, dans lequel chaque passage s'ouvre vers une surface externe de la partie de tête.

4. Procédé de surveillance de la fissuration d'un composant (10), le procédé comprenant :
la formation d'un composant (10) avec un orifice allongé formé en même temps (12), qui est interne au composant (10) et s'étend dans le composant (10) de manière adjacente à une surface (34) de celui-ci, et un orifice secondaire (32) qui s'étend depuis la surface (34) et intercepte l'orifice allongé (12) ;
le raccordement d'un connecteur (30, 48) selon l'une quelconque des revendications 1 à 3 au composant (10), dans lequel la partie de broche (38, 52) du connecteur (30, 48) est reçue dans l'orifice secondaire (32) et définit une séparation destinée à diviser l'orifice allongé en un premier orifice allongé (G1) et un second orifice allongé (G2), et dans lequel le premier passage et le second passage (40, 42, 44 ; 52) du connecteur (30, 48) sont en communication de fluide avec l'orifice allongé (12); le raccordement de l'orifice allongé (12) à un instrument de mesure de la pression via le connecteur (30, 48) ; et
la surveillance de l'orifice allongé (12) en termes de changement de niveau de pression.
